# EUROPEAN PATENT APPLICATION

(11) **EP 4 503 242 A1**
(43) Date of publication of application: **05.02.2025**
(21) Application number: 23779950.7
(22) Date of filing: 22.03.2023
(51) Int. Cl.: H01M 10/0587, H01M 4/134, H01M 4/38, H01M 10/052, H01M 10/0566, H01M 50/474, H01M 50/477, H01M 50/483

(54) **POWER STORAGE DEVICE**

(30) Priority: 31.03.2022 JP 2022058677
(71) Applicant: Panasonic Intellectual Property Management Co., Ltd., Kadoma-shi, Osaka 571-0057 (JP)
(72) Inventor: GOTOU,Toshiya, Kadoma-shi, Osaka 571-0057 (JP); FUKUOKA,Takahiro, Kadoma-shi, Osaka 571-0057 (JP); FUJITA, Goro, Kadoma-shi, Osaka 571-0057 (JP); OGINO, Hirotaka, Kadoma-shi, Osaka 571-0057 (JP)
(74) Representative: Eisenführ Speiser
(86) International application number: PCT/JP2023/011221
(87) International publication number: WO 2023/189938

(57) **Abstract**

A power storage device includes an electrode assembly in which a positive electrode, a negative electrode, and a separator are wound, a restraint member having a cylindrical shape, including metal, and covering a side peripheral surface of the electrode assembly, and an exterior can that accommodates the electrode assembly covered with the restraint member and an electrolyte solution. The restraint member is deformed in a radial direction of the electrode assembly when a predetermined force or more is received from the electrode assembly.

## Description

### TECHNICAL FIELD

The present disclosure relates to a power storage device.

### BACKGROUND ART

Some power storage devices use a lithium metal for a negative electrode. For example, PTL 1 discloses a lithium ion battery including a positive electrode having a positive electrode active material made of a lithium-containing transition metal oxide, a negative electrode having a negative electrode current collector and in which a lithium metal is precipitated on the negative electrode current collector at the time of charging, a separator disposed between the positive electrode and the negative electrode, and a non-aqueous electrolyte.

### Citation List

### Patent Literature

PTL 1: International Publication No. WO 2019/087709

### SUMMARY OF THE INVENTION

In the power storage device disclosed in PTL 1, expansion of the negative electrode due to the precipitation of the metal lithium can be improved by providing an air layer between the separator and the negative electrode. However, there is a need to further improve deterioration in reliability of the power storage device due to the expansion of the negative electrode after a long-term cycle.

An object of the present disclosure is to provide a power storage device having excellent reliability.

A power storage device according to an aspect of the present disclosure includes an electrode assembly in which a positive electrode, a negative electrode, and a separator are wound, a restraint member having a cylindrical shape, including metal, and covering a side peripheral surface of the electrode assembly, and an exterior member that accommodates the electrode assembly covered with the restraint member and an electrolyte solution. The restraint member is deformed in a radial direction of the electrode assembly when a predetermined force or more is received from the electrode assembly.

According to the present disclosure, it is possible to improve the reliability of the power storage device.

### BRIEF DESCRIPTION OF THE DRAWINGS

Fig. 1 is a schematic sectional view of a power storage device that is an example of a first exemplary embodiment as viewed from a side.
Fig. 2 is a schematic view illustrating a metal restraint member that is an example of the exemplary embodiment.
Fig. 3 is a schematic view illustrating a metal restraint member that is another example of the exemplary embodiment.
Fig. 4 is a schematic view illustrating a metal restraint member that is another example of the exemplary embodiment.
Fig. 5 is a schematic view illustrating a metal restraint member that is another example of the exemplary embodiment.
Fig. 6 is an exploded perspective view illustrating a power storage device according to a second exemplary embodiment.

### DESCRIPTION OF EMBODIMENTS

Hereinafter, exemplary embodiments of the present disclosure will be described in detail. In the following description, specific shapes, materials, directions, numerical values, etc. are examples illustrated to facilitate understanding of the present disclosure and may be changed as appropriate to suit uses, purposes, specifications, or other requirements.

### "Power storage device (exterior can)"

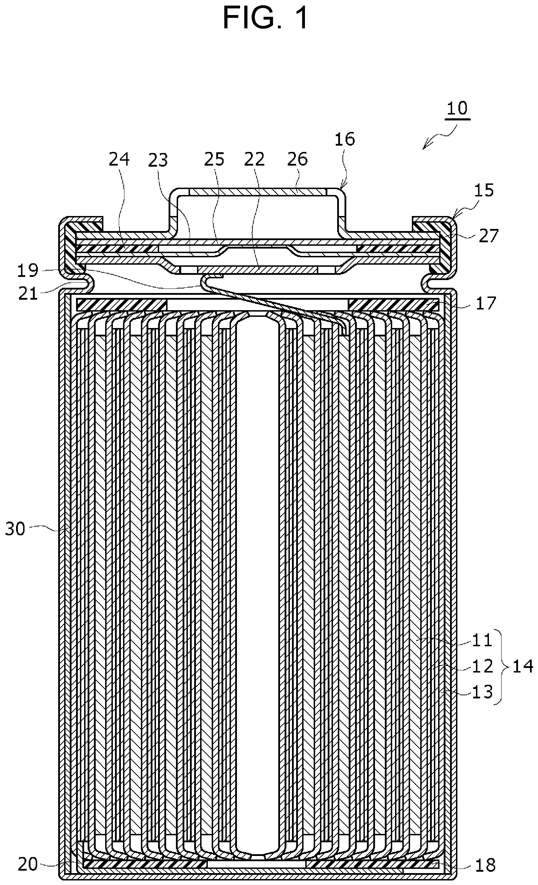

Power storage device 10, which is a first exemplary embodiment, will be described with reference to Fig. 1.

Power storage device 10 is mainly used as a power source for power. Power storage device 10 is used as a power source of an electrically powered device driven by a motor such as an electric car, an electrically powered tool, an electrically powered assist bicycle, an electrically powered motorcycle, an electrically powered wheelchair, an electrically powered tricycle, or an electrically powered cart. However, the application of power storage device 10 is not limited, and the power storage device may be used as a power source for various electric devices used indoors and outdoors, such as electric devices other than the electrically powered devices, for example, cleaners, wireless devices, lighting devices, digital cameras, and video cameras. In addition, power storage device 10 may be used as a power source of a wearable device. Power storage device 10 is used as a power source of a small electrically powered device such as a mobile phone, a portable player, or a personal digital assistant (PDA). However, the application of power storage device 10 is not limited.

As illustrated in Fig. 1, power storage device 10 includes winding-type electrode assembly 14, non-aqueous electrolyte (not illustrated), restraint member 30 which covers a side peripheral surface of electrode assembly 14, exterior can 15 as an exterior member, and sealing body 16 which closes exterior can 15. Electrode assembly 14 includes positive electrode 11, negative electrode 12, and separator 13, and is formed by spirally winding positive electrode 11 and negative electrode 12 with separator 13 interposed therebetween. Power storage device 10 is a lithium secondary battery in which a lithium metal is precipitated on negative electrode 12 at the time of charging and the lithium metal is dissolved in the non-aqueous electrolyte at the time of discharging.

Positive electrode 11 has a core body having a strip shape and an active material layer formed on at least one surface of the core body. The active material layer includes, for example, an active material, a binding material, and a conductive material.

The positive electrode active material is a material that occludes and releases lithium ions. Examples of the positive electrode active material include lithium-containing transition metal oxides, transition metal fluorides, polyanions, fluorinated polyanions, and transition metal sulfides. Among these examples, the lithium-containing transition metal oxide is preferable from the viewpoint of low production cost and high average discharging voltage. The lithium-containing transition metal oxide is a composite oxide containing lithium and metal Me other than lithium, and the metal Me contains at least a transition metal. Among these lithium-containing transition metal oxides, a composite oxide having a rock salt type (layered rock salt type) crystal structure having a layered structure is preferable from the viewpoint of obtaining a high capacity.

Metal Me may contain Sc, Ti, V, Cr, Mn, Fe, Co, Ni, Cu, Y, Zr, W, or the like as a transition metal element. The lithium-containing transition metal oxide may contain one kind or two or more kinds of transition metal elements. Metal Me desirably contains at least one selected from the group consisting of Co, Ni, and Mn as the transition metal element, and desirably contains Ni as at least the transition metal. The lithium-containing transition metal oxide may contain one or more kinds of typical elements as necessary. Examples of the typical element include Mg, Al, Ca, Zn, Ga, Ge, Sn, Sb, Pb, and Bi. The typical element may be Al or the like. That is, metal Me may contain Al as an optional component.

The lithium-containing transition metal oxide is represented by, for example, General Formula (1): LiₐNi_{b}M_{1-b}O₂. In General Formula (1), 0.9 ≤ a ≤ 1.2 and 0.65 ≤ b ≤ 1 are satisfied, and M is at least one element selected from the group consisting of Co, Mn, Al, Ti, Fe, Nb, B, Mg, Ca, Sr, Zr, and W.

A molar ratio: mLi/mMe of total amount mLi of Li contained in positive electrode 11 and negative electrode 12 to amount mMe of metal Me contained in the lithium-containing transition metal oxide is, for example, less than or equal to 1.2, and may be less than or equal to 1.1.

Examples of a material of the core body of positive electrode 11 include metal materials containing Al, Ti, Fe, and the like. The metal material may be Al, an Al alloy, Ti, a Ti alloy, or an Fe alloy (stainless steel (SUS) or the like). A thickness of the core body is not particularly limited, and is, for example, from 5 µm to 300 µm inclusive.

Negative electrode 12 includes a core body having a strip shape and a lithium metal precipitated on a surface of the core body. More specifically, lithium ions contained in the non-aqueous electrolyte receive electrons on the core body of negative electrode 12 by charging and become the lithium metal, and the lithium metal is precipitated on the surface of the core body of negative electrode 12. The lithium metal precipitated on the surface of the core body of negative electrode 12 is dissolved as the lithium ions in the non-aqueous electrolyte by discharging. Note that, the lithium ions contained in the non-aqueous electrolyte may be derived from a lithium salt added to the non-aqueous electrolyte, may be supplied from the positive electrode active material by charging, or may be used from both of the derivation and the supply.

Negative electrode 12 may include a lithium ion occlusion layer (layer exhibiting a capacity by the occlusion and release of the lithium ions by the active material (graphite or the like) of negative electrode 12) supported on the core body. In this case, an open circuit potential of negative electrode 12 at the time of full charging may be less than or equal to 70 mV with respect to the lithium metal (dissolution precipitation potential of lithium). In a case where the open circuit potential of negative electrode 12 at the time of full charging is less than or equal to 70 mV with respect to the lithium metal, there is the lithium metal on a surface of the lithium ion occlusion layer at the time of full charging. That is, negative electrode 12 exhibits a capacity due to precipitation and dissolution of the lithium metal.

The lithium ion occlusion layer includes a mixture layer containing an active material. The mixture layer may contain a binder, a thickener, a conductive agent, and the like in addition to the active material. Examples of the active material include carbonaceous materials, Si-containing materials, and Sn-containing materials. The lithium ion occlusion layer may contain one kind of active material, or may contain two or more kinds of active material in combination. Examples of the carbonaceous material include graphite, graphitizable carbon (soft carbon), and non-graphitizable carbon (hard carbon). The conductive material is, for example, a carbon material. Examples of the carbon material include carbon black, acetylene black, Ketjen black, carbon nanotubes, and graphite. Examples of the binding material include a fluororesin, polyacrylonitrile, a polyimide resin, an acrylic resin, a polyolefin resin, and a rubber-like polymer. Examples of the fluororesin include polytetrafluoroethylene and polyvinylidene fluoride.

The core body of negative electrode 12 is a conductive sheet having a strip shape. A metal foil, a metal film, or the like is used as the conductive sheet. Among these conductive sheets, it is desirable to use a copper foil or a copper alloy foil for the core body, but the core body is not particularly limited. The material of the core body may be a metal material other than lithium metal and a lithium alloy. The metal material may be, for example, Cu, Ni, Fe, or an alloy containing these metal elements. Examples of the alloy include a Cu alloy and an Fe alloy (stainless steel (SUS) or the like). The thickness of the core body is not particularly limited, and is, for example, from 5 µm to 300 µm inclusive.

Note that, in the following description of the exemplary embodiment, matters corresponding to both positive electrode 11 and negative electrode 12 may be described by using the term "electrode".

For separator 13, a porous sheet having ion permeability and insulation properties is used. Examples of the porous sheet include a thin film having a micropores, a woven fabric, and a nonwoven fabric. The material of separator 13 is not particularly limited, but may be a polymer material. Examples of the polymer material include an olefin resin, a polyamide resin, and cellulose. Examples of the olefin resin include polyethylene, polypropylene, and a copolymer of ethylene and propylene. Separator 13 may contain an additive, if necessary. Examples of the additive include ceramic inorganic fillers.

A thickness of separator 13 is not particularly limited, but is, for example, from 5 µm to 20 µm inclusive, and more preferably from 10 µm to 20 µm inclusive.

Spacers may be provided between positive electrode 11 or negative electrode 12 and separator 13. The spacer forms an inter-plate space for accommodating the precipitated lithium metal. Separator 13 is usually in a long sheet shape (strip shape) having long sides and short sides. Here, a direction along the short side of separator 13 is defined as D1. In a section (hereinafter, referred to as a reference section.) parallel to direction T and parallel to direction D1 of the spacer, a contact length (width of first region R1) between the spacer and separator 13, positive electrode 11, or negative electrode 12 is not particularly limited, but is, for example, from 500 µm to 2000 µm inclusive. When the contact length is in this range, stress applied to the spacer is easily uniformly dispersed in separator 13, positive electrode 11, and negative electrode 12. In addition, first region R1 facing the spacer is easily disposed to face positive electrode 11 or negative electrode 12 in a uniform and dispersed state. Note that, the contact length is an average value of contact lengths at five different reference sections.

A shape of the spacer in the reference section is not particularly limited. The shape of the spacer in the reference section is, for example, a rectangle, a rectangle having a curve at at least one corner, a trapezoid, an ellipse, a part of an ellipse, or a shape similar thereto.

A material constituting the spacer is not particularly limited. The spacer may be formed, for example, by applying a solution or a dispersion containing a resin material or the like to a surface of separator 13, positive electrode 11, or negative electrode 12 and drying the solution or the dispersion. A solvent or a dispersion medium is not particularly limited, but for example, N-methyl-2-pyrrolidone (NMP) can be used. In addition, the spacer may be formed by spraying particles in a desired shape on the surface of separator 13, positive electrode 11, or negative electrode 12. The spacer may be formed by applying a curable resin to the surface of separator 13, positive electrode 11, or negative electrode 12 in a desired shape and curing the curable resin. In addition, the spacer may be formed by bonding an adhesive tape to the surface of separator 13, positive electrode 11, or negative electrode 12. Among the above methods, the method using the solution or dispersion containing the resin material is preferable. Among these methods, the method using the dispersion containing the resin material and particles is preferable. In this case, the spacer is made of a composite containing a resin material and particles.

Examples of the resin material include fluorine-containing resins such as polyvinylidene fluoride (PVdF) and polytetrafluoroethylene, fluorine-containing rubbers such as vinylidene fluoride-tetrafluoroethylene copolymers and ethylene-tetrafluoroethylene copolymers, styrene-butadiene copolymers or hydrides thereof, acrylonitrile-butadiene copolymers or hydrides thereof, methacrylic acid ester-acrylic acid ester copolymers, styrene-acrylic acid ester copolymers, acrylonitrile-acrylic acid ester copolymers, rubbers such as ethylene propylene rubber, polyvinyl alcohol, and polyvinyl acetate, cellulose derivatives such as ethyl cellulose, methyl cellulose, hydroxyethyl cellulose, and carboxymethyl cellulose, acrylic resins such as acrylic acid-methacrylic acid copolymers, polyphenylene ethers, polysulfones, polyethersulfones, polyphenylene sulfides, polyetherimides, polyimides, wholly aromatic polyamides (aramids), polyimides, polyamideimides, polyacrylonitriles, polyvinyl alcohols, polyethers, polyolefins, silicone resins, urethane resins, melamine resins, urea resins, and epoxy resins.

The particles may be inorganic particles or organic particles. Among these particles, inorganic particles such as insulating metal oxides, metal hydroxides, metal nitrides, metal carbides, and metal sulfides can be mentioned. Preferable examples of the metal oxide include aluminum oxide (alumina or boehmite), magnesium oxide, titanium oxide (titania), zirconium oxide, and silicon oxide (silica). Examples of the metal hydroxide include aluminum hydroxide. Examples of the metal nitride include silicon nitride, aluminum nitride, boron nitride, and titanium nitride. Examples of the metal carbide include silicon carbide and boron carbide. Examples of the metal sulfide include barium sulfate. In addition, minerals such as aluminosilicate, layered silicate, barium titanate, and strontium titanate may be used. Among these minerals, alumina, silica, titania, and the like are preferably used.

An average particle diameter of the particles is not particularly limited, but is, for example, preferably less than or equal to 10 µm, more preferably from 0.1 µm to 2.0 µm inclusive. The average particle diameter can be determined as an average of diameters of equivalent circles having the same area as the particles by capturing a section of the spacer in direction T in the secondary battery with an electron microscope and performing image processing such as binarization of the captured image to specify particle portion C. The average is desirably obtained from, for example, 100 or more particles.

In the composite containing the resin material and particles, the particles are desirably contained at a ratio of 70 parts by mass or more and 100 parts by mass or less per 100 parts by mass of the resin material. As a result, it is easy to secure sufficient strength of the spacer.

The disposition of the spacer is not particularly limited. For example, as viewed from direction T (normal direction of a main surface of separator 13), the spacer is preferably disposed such that straight line SL along direction D1 is drawn to pass through the spacer at three or more locations (preferably, 4 or more locations, further 5 or more locations). In this case, it is difficult for the lithium metal to be non-uniformly or to be precipitated in a dendrite shape on negative electrode 12. Further, since local expansion of negative electrode 12 is suppressed, damage to the electrode hardly occurs. In addition, the spacer has more fulcrums for supporting separator 13 and the electrode, and stress is relatively evenly applied to separator 13 and the electrode from the spacer. Accordingly, the damage to the electrode is further suppressed. In addition, a more uniform pressing force can be applied from separator 13 to the entire lithium metal to be precipitated. Accordingly, a precipitation direction of the lithium metal is more easily controlled to a surface direction of negative electrode 12.

As viewed from direction T, in straight line SL, ratio d/h of minimum distance d (µm) between adjacent spacers to height h (µm) of the spacer may be, for example, from 10 to 800 inclusive, and may be from 40 to 400 inclusive. The d/h ratio is controlled within the above range, and thus, a space necessary and sufficient for accommodating the lithium metal is easily secured. Further, a more uniform pressing force can be applied from separator 13 to the entire lithium metal to be precipitated. Minimum distance d between adjacent spacers may be measured at one location on each of any 10 straight lines SL, and may be obtained as an average value thereof.

The spacer may be, for example, a plurality of protrusions having a linear shape and disposed in a stripe shape on the surface of the electrode or separator 13 to intersect direction D1. For example, one protrusion along a long side direction (hereinafter, direction D2) of separator 13 may be provided at each of both ends of the surface of separator 13 in direction D1, and one or more protrusions along direction D2 may be provided between the both ends. In this case, straight line SL can be drawn to pass through the spacer at a total of three or more locations of two locations at both ends and one or more locations between the both ends. The spacer including the plurality of linear protrusions can be relatively easily formed on the surface of separator 13 or the electrode. In addition, it is also easy to control parameters such as height h and the d/h ratio.

Next, the disposition of the spacers will be described. The spacers are provided on the surface of separator 13. However, the exemplary embodiment of the present disclosure is not limited thereto, and the spacers may be provided on the surface of the electrode.

The spacer includes linear protrusions along direction D2 provided at both ends of the surface of separator 13 in direction D1, and a linear protrusion along direction D2 provided at the center between the both ends. That is, the spacer includes a total of three linear protrusions substantially parallel to each other. Accordingly, straight line SL drawn along direction D1 passes through the spacer at three locations. Note that, a case where the linear protrusions are substantially parallel to each other means that the linear protrusions are substantially parallel to each other, and the linear protrusions may intersect each other at an angle of, for example, 0° to 20° or 0° to 10°.

The spacer includes the plurality of linear protrusions disposed in a stripe shape on the surface of separator 13 along direction D2. In this case, straight line SL can be drawn to pass through the same number of locations as the linear protrusions along direction D1.

The spacer includes a plurality of protrusions having a spot shape disposed to be evenly distributed on the surface of separator 13. When straight line SL is drawn along direction D1, the number of spot-shaped protrusions passing through straight line SL varies depending on the position of straight line SL. Straight line SL1 passes through four protrusions, and straight line SL2 passes through five protrusions. In such a case, the number of protrusions through which at least one straight line SL passes, among the plurality of straight lines SL that can be drawn in different aspects may be three or more.

The spacer is a continuous body of ribs having a honeycomb-shape and evenly distributed on the surface of separator 13. In this case, when straight line SL is drawn along direction D1, the number of ribs passing through varies depending on the position of straight line SL. Straight line SL1 passes through the rib at five locations, and straight line SL2 passes through the rib at four locations.

The spacer includes a plurality of protrusions having a line shape and disposed to be evenly distributed on the surface of separator 13. The line-shaped protrusions are arrayed to alternately intersect along direction D1. In this case, when a straight line is drawn along direction D1, the number of line-shaped protrusions passing through varies depending on the position of straight line SL. For example, straight line SL1 passes through three or four protrusions, straight line SL2 passes through three protrusions, and straight line SL3 passes through two protrusions.

Positive electrode 11, negative electrode 12, and separator 13 constituting electrode assembly 14 are all formed in a strip shape, and are spirally wound to be alternately stacked in a radial direction of electrode assembly 14. In electrode assembly 14, a longitudinal direction of each electrode is a winding direction, and a width direction of each electrode is an axial direction. Positive electrode lead 19 electrically connecting positive electrode 11 and a positive-electrode terminal is connected to, for example, a central portion of positive electrode 11 in the longitudinal direction, and extends from one end of electrode assembly 14. Negative electrode lead 20 electrically connecting negative electrode 12 and a negative-electrode terminal is connected to, for example, an end portion of negative electrode 12 in the longitudinal direction, and extends from the other end of electrode assembly 14.

The non-aqueous electrolyte contains, for example, a non-aqueous solvent, and lithium ions and anions dissolved in the non-aqueous solvent. The non-aqueous electrolyte may be in a liquid phase or a gel phase. The non-aqueous electrolyte in the liquid phase is prepared by dissolving a lithium salt in the non-aqueous solvent. The lithium ions and anions are generated by dissolving the lithium salt in the non-aqueous solvent.

A known material used for the non-aqueous electrolyte of the lithium secondary battery can be used as the lithium salt or anions. Specifically, examples thereof include BF₄⁻, ClO₄⁻, PF₆⁻, CF₃SO₃⁻, CF₃CO₂⁻, anions of imides, anions of oxalate complexes, and the like. Examples of the anion of the imide include N(SO₂CF₃)₂⁻ and N(CₘF₂ₘ⁺¹SO₂)ₓ(CₙF₂ₙ⁺¹SO₂)_{y}⁻(m and n are each independently 0 or an integer of 1 or more, x and y are each independently 0, 1, or 2, and x + y = 2 is satisfied.). The anion of the oxalate complex may contain boron and/or phosphorus. The non-aqueous electrolyte may contain these anions alone or two or more kinds thereof.

From the viewpoint of suppressing the precipitation of the lithium metal in the dendrite shape, the non-aqueous electrolyte desirably contains at least an anion of the oxalate complex, and particularly desirably contains a fluorine-containing oxalate complex anion. It is easy for the lithium metal to be uniformly precipitated in the form of fine particles by an interaction between the fluorine-containing oxalate complex anion and lithium. Thus, local precipitation of the lithium metal is easily suppressed. The fluorine-containing oxalate complex anion and other anions may be combined. The other anion may be an anion of PF₆⁻ and/or an imide. Examples of the anion of the oxalate complex include a bis(oxalate)borate anion, a difluoro(oxalate)borate anion (BF₂(C₂O₄)⁻), PF₄(C₂O₄)⁻, and PF₂(C₂O₄)₂⁻, and it is desirable to use at least the difluoro(oxalate)borate anion.

Examples of the non-aqueous solvent include an ester, an ether, a nitrile, an amide, and a halogen-substituted product thereof. The non-aqueous electrolyte may contain these non-aqueous solvents alone or two or more kinds thereof. Examples of the halogen-substituted product include fluorides.

Examples of the ester include acid esters and carboxylic acid esters. Examples of a cyclic carbonate ester include ethylene carbonate, propylene carbonate, and fluoroethylene carbonate (FEC). Examples of a chain carbonate ester include dimethyl carbonate (DMC), ethyl methyl carbonate (EMC), and diethyl carbonate. Examples of a cyclic carboxylic acid ester include γ-butyrolactone and γ-valerolactone. Examples of a chain carboxylic acid ester include ethyl acetate, methyl propionate, and methyl fluoropropionate.

Examples of the ether include cyclic ethers and chain ethers. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

A concentration of the lithium salt in the non-aqueous electrolyte ranges, for example, from 0.5 mol/L to 3.5 mol/L inclusive. A concentration of the anion in the non-aqueous electrolyte may be from 0.5 mol/L to 3.5 mol/L inclusive. A concentration of the anion of the oxalate complex in the non-aqueous electrolyte may be from 0.05 mol/L to 1 mol/L inclusive.

Restraint member 30 is a member which is formed in a cylindrical shape and covers an outer peripheral surface of electrode assembly 14. Details of restraint member 30 will be described later.

Power storage device 10 may have a core member inserted into a hollow portion in an innermost peripheral portion of wound electrode assembly 14. The core member is not particularly limited, but may be metal, and among these core metals, stainless steel is desirable in terms of strength and durability.

A shape of the core member may be selected in accordance with a hollow shape of electrode assembly 14. When electrode assembly 14 has a columnar shape, the shape of the core member may also be a columnar shape. An outer diameter of the core member may be, for example, a size at which a circumferential surface of electrode assembly 14 of the lithium secondary battery in a discharging state after initial charging and discharging and the core member come into contact with each other. In this case, since a moderate pressure is applied from the core member to electrode assembly 14 from an inner peripheral side at all times from the time of charging to the time of discharging, buckling of negative electrode 12 is effectively suppressed.

The shape of the core member is desirably a hollow columnar shape among the columnar shapes. The cylindrical core member can moderately expand and contract, and can play a role like a spring. In addition, since the hollow cylindrical core member has a sufficient space for accommodating the non-aqueous electrolyte in the hollow, liquid withering is further less likely to occur. In a case where a material of the core member is stainless steel having a Young's modulus of 100 MPa or more, a thickness of the material of the core member in the radial direction may be, for example, from 100 µm to 500 µm inclusive.

In power storage device 10, exterior can 15 and sealing body 16 constitute a metal battery case that accommodates electrode assembly 14 and the non-aqueous electrolyte. Insulating plates 17 and 18 are provided above and below electrode assembly 14, respectively. Positive electrode lead 19 extends toward sealing body 16 through a through-hole of insulating plate 17, and is welded to a lower surface of filter 22 which is a bottom plate of sealing body 16. In power storage device 10, cap 26 of sealing body 16 electrically connected to filter 22 serves as the positive-electrode terminal. On the other hand, negative electrode lead 20 extends toward a bottom of exterior can 15 and is welded to an inner surface of the bottom of exterior can 15. In power storage device 10, exterior can 15 serves as the negative-electrode terminal.

Exterior can 15 is a metal container having a bottomed cylindrical shape. Gasket 27 is disposed between exterior can 15 and sealing body 16 to secure sealability within the battery case. Exterior can 15 includes extending portion 21 formed by, for example, pressing a side surface portion from outside to support sealing body 16. Extending portion 21 is preferably formed in an annular shape along a circumferential direction of exterior can 15, and sealing body 16 is supported by an upper surface thereof.

Sealing body 16 has a structure in which filter 22, lower valve body 23, insulating member 24, upper valve body 25, and cap 26 are stacked in this order from electrode assembly 14 side. Each member constituting sealing body 16 has, for example, a disk shape or a ring shape, and the members excluding insulating member 24 are electrically connected to each other. Lower valve body 23 and upper valve body 25 are connected to each other at central portions, and insulating member 24 is interposed between peripheral edges thereof.

Since a vent hole is provided in lower valve body 23, when an internal pressure of the battery increases due to abnormal heat generation, upper valve body 25 swells toward cap 26 and separates from lower valve body 23. Thus, electrical connection between the valve bodies is cut off. When the internal pressure further increases, upper valve body 25 breaks, and gas is discharged from an opening of cap 26.

### "Restraint member"

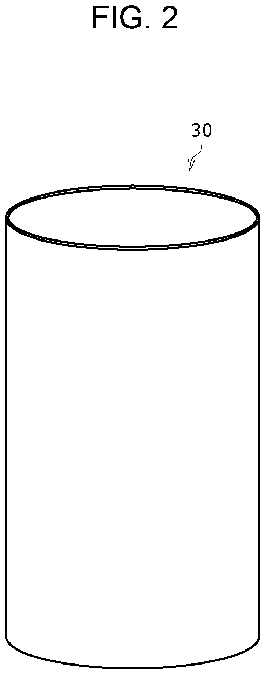

Restraint member 30 will be described with reference to Figs. 1 and 2.

As illustrated in Figs. 1 and 2, restraint member 30 is a member that covers the side peripheral surface of winding-type electrode assembly 14 as described above, and is accommodated in exterior can 15. In power storage device 10, electrode assembly 14 is held and restrained by restraint member 30, and electrode assembly 14 and the non-aqueous electrolyte are sealed by exterior can 15. Restraint member 30 is made of a metal material such as SUS or aluminum. Restraint member 30 is formed in a cylindrical shape, and a length of restraint member 30 in the radial direction is formed to be slightly longer than a length of electrode assembly 14 in the radial direction (a state before expansion).

Restraint member 30 is configured to expand in the radial direction as electrode assembly 14 expands in the radial direction. In other words, restraint member 30 has such strength as to expand in the radial direction by the pressing force due to the expansion of electrode assembly 14 in the radial direction. More specifically, a wall thickness of restraint member 30 having a tubular shape may be set to be smaller than a predetermined value, or a hole or a cutout may be formed in restraint member 30 to facilitate deformation of restraint member 30.

Here, in the lithium secondary battery in which the lithium metal is precipitated on negative electrode 12 at the time of charging and the lithium metal is dissolved in the non-aqueous electrolyte at the time of discharging as in power storage device 10 of the present exemplary embodiment, a space layer is crushed by the expansion of negative electrode 12 at the end of a cycle, and it becomes difficult to secure a lithium precipitation space. In addition, there is also a possibility that the electrode is buckled or broken by the expansion of negative electrode 12.

On the other hand, the core member is inserted into the hollow portion of electrode assembly 14, and the electrode assembly is covered with exterior can 15. Thus, electrode assembly 14 can be restrained to suppress the expansion of the electrode plate. However, even though the electrode assembly is firmly restrained as described above, electrode assembly 14 presses exterior can 15 due to the expansion of negative electrode 12 or the like, and electrode assembly 14 is pressed by a reaction force of the pressing force. As the swelling of negative electrode 12 increases, the force pressing electrode assembly 14 increases. At this time, the space layer of electrode assembly 14 is crushed, the non-aqueous electrolyte is pushed out from electrode assembly 14 by the reaction force of exterior can 15 caused by the expansion of electrode assembly 14, and it becomes difficult to satisfactorily maintain a capacity retention ratio of power storage device 10.

However, in power storage device 10 of the present exemplary embodiment, even in a case where electrode assembly 14 expands, even though power storage device 10 restrains electrode assembly 14 with a predetermined force in an initial stage of the cycle, when a predetermined number of cycles (or a predetermined force received from electrode assembly 14 to restraint member 30) is exceeded, as electrode assembly 14 expands in the radial direction, restraint member 30 expands in the radial direction. Thus, the non-aqueous electrolyte is not pushed out from electrode assembly 14. As a result, the capacity retention ratio of power storage device 10 can be satisfactorily maintained.

Restraint member 30 is configured to break when a predetermined pressing force or more acts in the radial direction. As a result, when the predetermined pressing force or more acts in the radial direction of restraint member 30 by the gas or the like generated at the time of abnormality of power storage device 10, restraint member 30 is broken, and thus, an escape path of the gas can be secured.

As described above, restraint member 30 is disposed with a gap from the side peripheral surface of electrode assembly 14 before electrode assembly 14 expands. In addition, in a case where electrode assembly 14 expands, restraint member 30 holds electrode assembly 14 in close contact with the side peripheral surface of electrode assembly 14. Further, in a case where electrode assembly 14 further expands, as electrode assembly 14 expands, restraint member 30 expands to restrain electrode assembly 14. Further, at the time of abnormality of power storage device 10, restraint member 30 is broken by the pressing force of the generated gas or the like.

Restraint member 30 is formed such that the length of restraint member 30 in the longitudinal direction (axial direction) is longer than the length of electrode assembly 14 in the longitudinal direction (axial direction).

Here, in a case where the length of restraint member 30 in a longitudinal direction is shorter than the length of electrode assembly 14 in a longitudinal direction and one end portion of electrode assembly 14 protrudes from restraint member 30, when electrode assembly 14 expands, a defect such as deterioration of a portion of electrode assembly 14 which is restrained by one end portion of restraint member 30 or difficulty of circulation of the non-aqueous electrolyte in the portion occurs.

However, since the length of restraint member 30 of the present exemplary embodiment in the longitudinal direction is longer than the length of electrode assembly 14 in the longitudinal direction, the above-mentioned defect does not occur.

Restraint member 30 is fixed to exterior can 15. As means for fixing restraint member 30 and exterior can 15, it is preferable that a tab or the like is provided on restraint member 30 and the restraint member is joined to exterior can 15 by welding.

In power storage device 10, in a case where electrode assembly 14 expands by providing restraint member 30, since electrode assembly 14 is restrained by restraint member 30, it is not necessary to restrain electrode assembly 14 by exterior can 15. As a result, strength of exterior can 15 can be reduced. Specifically, for example, a thickness of exterior can 15 can be reduced, and material cost of exterior can 15 can be reduced.

In addition, according to power storage device 10, even in a case where the design of the material, the shape, the thickness, and the like of electrode assembly 14 is changed by providing restraint member 30, for example, the material, the shape, the thickness, and the like of restraint member 30 can be changed without changing the material, the shape, the thickness, and the like of exterior can 15 and sealing body 16.

### "Modification examples of restraint member"

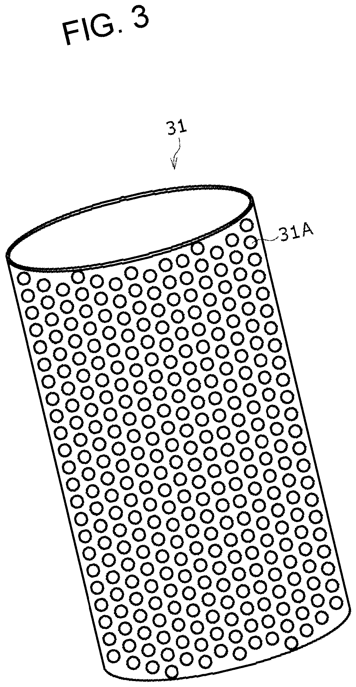

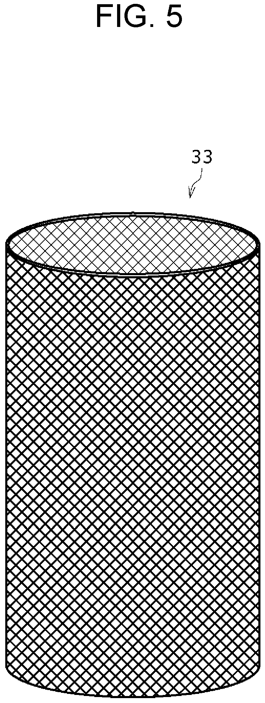

Modification examples of restraint member 30 will be described with reference to Figs. 3 and 5.

As illustrated in Fig. 3, restraint member 31 may be made of a punching metal in which a plurality of holes 31A are formed, and may be formed in a cylindrical shape. According to restraint member 31, in a case where electrode assembly 14 expands, a flow of an electrolyte solution on a side peripheral surface of electrode assembly 14 is promoted while electrode assembly 14 is restrained.

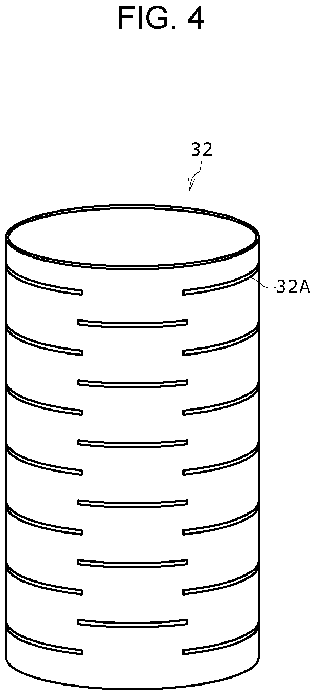

As illustrated in Fig. 4, restraint member 32 may be formed in a cylindrical shape, and slit 32A may be formed. According to restraint member 32, in a case where electrode assembly 14 expands, a flow of an electrolyte solution on a side peripheral surface of electrode assembly 14 is promoted while electrode assembly 14 is restrained.

As illustrated in Fig. 5, restraint member 33 may be formed in a cylindrical shape and may be formed in a mesh structure. According to restraint member 33, in a case where electrode assembly 14 expands, a flow of an electrolyte solution on a side peripheral surface of electrode assembly 14 is promoted while electrode assembly 14 is restrained.

### "Power storage device (pouch)"

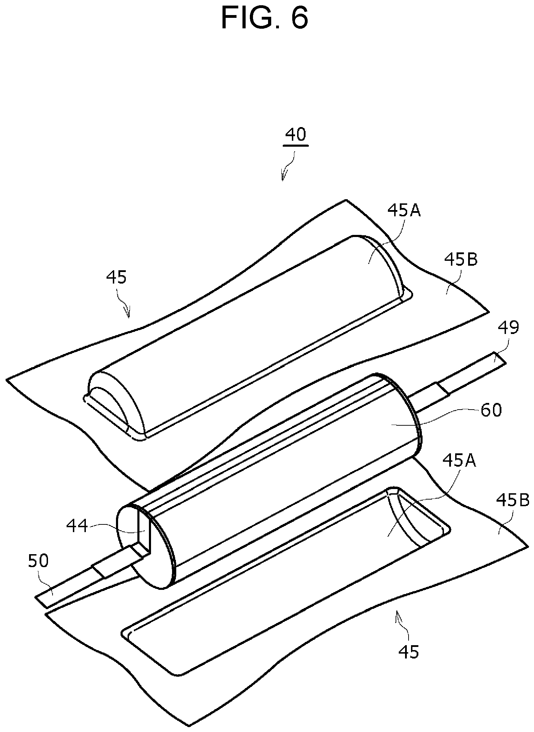

Power storage device 40, which is a second exemplary embodiment, will be described with reference to Fig. 6.

Power storage device 40 is mainly used as a power source of a wearable device. Power storage device 40 is used as a power source of a small electrically powered device such as a mobile phone, a portable player, or a personal digital assistant (PDA). However, the application of power storage device 40 is not limited.

As illustrated in Fig. 6, power storage device 40 includes electrode assembly 44 having a wound structure, a non-aqueous electrolyte (not illustrated), above-mentioned restraint member 60 which covers an outer periphery of electrode assembly 44, and film 45 as an exterior member which accommodates electrode assembly 44 and restraint member 30. Electrode assembly 44 includes a positive electrode, a negative electrode, and a separator, and is configured by spirally winding the positive electrode and the negative electrode with the separator interposed therebetween. Power storage device 10 is a lithium secondary battery in which a lithium metal is precipitated on the negative electrode at the time of charging, and the lithium metal is dissolved in a non-aqueous electrolyte at the time of discharging.

The positive electrode, the negative electrode, and the separator constituting electrode assembly 44 are all formed in a strip shape, and are spirally wound to be alternately stacked in a radial direction of electrode assembly 44. In electrode assembly 44, a longitudinal direction of each electrode is a winding direction, and a width direction of each electrode is an axial direction. Positive electrode lead 49 electrically connecting the positive electrode and a positive-electrode terminal extends from one end of electrode assembly 44. Negative electrode lead 50 electrically connecting the negative electrode and a negative-electrode terminal extends from the other end of electrode assembly 44.

Film 45 accommodates electrode assembly 44 and restraint member 60. Film 45 is made of a material having plasticity, and a laminate film, a film made of aluminum and a resin, or the like is used. Film 45 has two containers 45A and 45A having substantially partial columnar shapes and seal portions 45B and 45B provided around containers 45A and 45A. Here, the substantially partial columnar shape is a shape obtained by cutting the substantially columnar shape along the axial direction thereof and dividing the substantially partial columnar into two.

For example, a heat fusion resin layer is formed on a side of seal portion 45B facing other seal portion 45B. When electrode assembly 44 and restraint member 60 are accommodated by film 45, electrode assembly 44 and restraint member 60 are accommodated by container 45A, and seal portions 45B are joined to each other by melting heat fusion resin of seal portion 45B by heat. A polyolefin-based resin such as polypropylene (PP) or polyethylene (PE) is preferably used, and for example, non-stretched polypropylene (CPP) is used as the heat fusion resin.

One end of positive electrode lead 49 is electrically connected to the positive electrode of electrode assembly 44, and the other end of positive electrode lead 49 is led out to an outside of film 45 through seal portion 45B. One end of negative electrode lead 50 is electrically connected to the negative electrode of electrode assembly 44, and the other end of negative electrode lead 50 is led out to the outside of film 45 through seal portion 45B.

As described above, restraint member 60 is a member that covers the side peripheral surface of winding-type electrode assembly 44, and is sealed by film 45. In power storage device 40, electrode assembly 44 is held and restrained by restraint member 60, and electrode assembly 44 and the non-aqueous electrolyte are sealed by film 45. Restraint member 60 is made of a metal material such as SUS or aluminum. Restraint member 60 is formed in a cylindrical shape, and a length of restraint member 60 in the radial direction is formed to be slightly longer than a length of electrode assembly 44 in the radial direction.

Restraint member 60 is configured to expand in the radial direction as electrode assembly 44 expands in the radial direction. In other words, restraint member 60 has such strength as to expand in the radial direction by pressing due to the expansion of electrode assembly 44 in the radial direction.

Restraint member 60 is configured to break when a predetermined pressing force or more acts in the radial direction. Restraint member 60 is formed such that the length of restraint member 60 in the longitudinal direction (axial direction) is longer than the length of electrode assembly 14 in the longitudinal direction (axial direction). Restraint member 60 is fixed to film 45. As means for fixing restraint member 60 and film 45, it is preferable to perform fixing by heat welding or by using an adhesive. In addition, it is preferable to provide a tab or the like which is a portion fixed to film 45 on restraint member 60.

Since the action and effect of restraint member 60 are similar to the action and effect of restraint member 30 of the first exemplary embodiment described above, the description thereof will be omitted. In addition, since a modification example of restraint member 60 is similar to restraint member 30 of the first exemplary embodiment described above, the description thereof will be omitted.

### "Performance evaluation test"

Hereinafter, the lithium secondary battery according to the present disclosure will be described more specifically based on samples. However, the present disclosure is not limited to the following examples.

### (Sample 1)

### (1) Production of positive electrode

A rock salt type lithium-containing transition metal oxide (NCA: positive electrode active material) containing Li, Ni, Co, and Al (a molar ratio of Li to the sum of Ni, Co and Al is 1.0) and having a layered structure, acetylene black (AB; conductive material), and polyvinylidene fluoride (PVdF; binding material) were mixed at a mass ratio of NCA:AB:PVdF = 95:2.5:2.5, an appropriate amount of N-methyl-2-pyrrolidone (NMP) was further added thereto, and the mixture was stirred. As a result, a mixture slurry was prepared. The obtained mixture slurry was applied to both surfaces of an Al foil having a strip shape (core body of a positive electrode), was then dried, and a coating film of a positive electrode mixture layer was rolled by using a roller. Finally, the obtained stacked body of the core body of the positive electrode and the mixture layer of the positive electrode was cut into a predetermined electrode size to obtain a positive electrode including positive mixture layers on both surfaces of the core body. A positive electrode lead made of aluminum is attached to the positive electrode.

### (2) Formation of spacer

10 parts by mass of polyvinylidene fluoride (PVdF) which is a resin material, 90 parts by mass of alumina (containing alumina having an average particle diameter of 1 µm and alumina having an average particle diameter of 0.1 µm in a mass ratio of 10/1) which are inorganic particles, and a dispersion medium N-methyl-2-pyrrolidone (NMP) were mixed. As a result, a spacer ink was prepared. In addition, a polyethylene separator (microporous film) having a thickness of 20 µm was prepared.

The spacer ink was applied along direction D2 to both ends of both surfaces of the separator in direction D1 and a center between the both ends, and was then dried with hot air. As a result, a total of three spacers which are linear protrusions parallel to each other were provided. The spacer ink was applied by using a dispenser. A width of the protrusion of the spacer was 1 mm, and height t was 30 µm.

In direction D1, minimum distance d between adjacent protrusions was 9 mm, and a ratio of an area of a first region to a total area of the first region and a second region was about 14%.

### (3) Production of negative electrode

An electrolytic copper foil having a strip shape (thickness 15 µm) was prepared as the core body of the negative electrode.

### (4) Preparation of non-aqueous electrolyte

Ethylene carbonate (EC) and dimethyl carbonate (DMC) were mixed at a volume ratio of EC:DMC = 30:70, and LiPF₆ and LiBF₂ (C₂O₄) were dissolved in the obtained mixed solvent at concentrations of 1 mol/L and 0.1 mol/L, respectively. As a result, a non-aqueous electrolyte in a liquid phase was prepared.

### (5) Assembly of battery

In an inert gas atmosphere, the core body of the positive electrode and the core body of the negative electrode were spirally wound with the separator interposed therebetween to prepare an electrode assembly. Since all lithium contained in the electrode assembly is derived from the positive electrode, a molar ratio of total amount mLi of lithium contained in the positive electrode and the negative electrode to amount mM of metal M(here, Ni, Co, and Al) contained in the positive electrode: mLi/mM is 1.0.

The electrode assembly had a hollow portion with a diameter of 3.2 mm and an outer diameter of 9.2 mm. The electrode assembly is accommodated in a restraint member having a wall thickness of 0, 1 mm and an inner diameter of 9.4 mm and is made of SUS304. Subsequently, a core member having a cylindrical shape and made of stainless steel (SUS having a Young's modulus of 97 GPa) was inserted into the hollow of the electrode assembly. A material of the core member had a thickness of 0.1 mm and an outer diameter of 3.0 mm. Further, a strain gauge (manufactured by Kyowa Electronic instruments Co., Ltd.) was attached to an outer peripheral surface of the restraint member via an adhesive in order to detect displacement of the restraint member. Detection lines of a positive electrode lead, a negative electrode lead, and the strain gauge were accommodated in an exterior member made of a film in which the electrode assembly to which the restraint member and the core member were attached was sandwiched between a pair of PP layers of aluminum in a state of being exposed to an outside, and a non-aqueous electrolyte was injected, and an edge portion of the film was sealed. As a result, Sample 1 of a power storage device was completed.

### (Sample 2)

Sample 2 having the same configuration as Sample 1 except that the wall thickness of the restraint member was 0.2 mm was prepared.

### (Sample 3)

Sample 3 having the same configuration as Sample 1 except that the restraint member was not used was prepared.

### (Test conditions)

Obtained Samples 1 to 3 were evaluated by performing a charging and discharging test. In the charging and discharging test, a cycle in which 5 batteries were charged under the following conditions in a thermostatic chamber at 25°C, were then rested for 20 minutes, and were discharged under the following conditions was repeated 300 times. A ratio of a discharging capacity at a predetermined cycle to the discharging capacity at a first cycle was obtained as a capacity retention ratio (%). Results are represented in Table 1. In addition, Samples 1 and 2 using the restraint members also show strain amounts after a predetermined cycle.

### (Charging)

Constant current charging was performed at a current of 10 mA per unit area (square centimeter) of the electrode until a battery voltage reached 4.1 V, and then constant voltage charging was performed at a voltage of 4.1 V until a current value per unit area of the electrode reached 1 mA.

### (Discharging)

Constant current discharging was performed at a current of 10 mA per unit area of the electrode until the battery voltage reached 3.0 V.

**[Table 1]**

| | 0cyc | | 300cyc | |
|---|---|---|---|---|
| | Capacity retention ratio [%] | Strain of restraint member @SOC100% [µST] | Capacity retention ratio [%] | Strain of restraint member @SOC100% [µST] |
| Sample 1 | 100 | 249 | 76.7 | 1305 |
| Sample 2 | 100 | 343 | 63.2 | 918 |
| Sample 3 | 100 | - | 0% (electrode breakage) | - |

From Table 1, it can be seen that Samples 1 and 2 using the restraint members suppressed a large decrease in the capacity retention ratio after 300 cycles as compared with Sample 3 not using the restraint member. In addition, since the strain amount of the restraint member is changed, it can be seen that the restraint members are deformed in Samples 1 and 2 in accordance with the expansion of the electrode assembly. In addition, comparing Samples 1 and 2, it can be seen that Sample 1 in which the wall thickness of the restraint member is thinner than Sample 2 has a larger deformation amount of the restraint member than Sample 2 and has a higher capacity retention ratio. In addition, in Sample 3 in which the restraint member was not used, since an outer periphery of the electrode assembly was not restrained at all, the electrode assembly significantly expanded, and the electrode was broken in the middle of repeating the cycle. From this test result, it can be seen that reliability of the power storage device is enhanced by using the restraint member which can be deformed in accordance with the expansion of the electrode assembly when a predetermined force or more is received.

Note that, the present disclosure is not limited to the above-described exemplary embodiment and modification examples thereof, and it is a matter of course that various changes and improvements can be made within the scope of the content described in the claims of the present application.

### REFERENCE MARKS IN THE DRAWINGS

- 10: power storage device
- 11: positive electrode
- 12: negative electrode
- 13: separator
- 14: electrode assembly
- 15: exterior can (exterior member)
- 16: sealing body
- 17: insulating plate
- 18: insulating plate
- 19: positive electrode lead
- 20: negative electrode lead
- 21: extending portion
- 22: filter
- 23: lower valve body
- 24: insulating member
- 25: upper valve body
- 26: cap
- 27: gasket
- 30: restraint member
- 31: restraint member
- 31A: hole
- 32: restraint member
- 32A: slit
- 33: restraint member
- 40: power storage device
- 44: electrode assembly
- 45: film (exterior member)
- 45A: container
- 45B: seal portion
- 49: positive electrode lead
- 50: negative electrode lead
- 60: restraint member

## Claims

1. A power storage device comprising:
an electrode assembly in which a positive electrode, a negative electrode, and a separator are wound;
a restraint member having a cylindrical shape, including of metal, and covering a side peripheral surface of the electrode assembly; and
an exterior member that accommodates the electrode assembly covered with the restraint member and an electrolyte solution, wherein the restraint member is deformed in a radial direction of the electrode assembly when a predetermined force or more is received from the electrode assembly.

2. The power storage device according to Claim 1, wherein
in the electrode assembly, the separator is disposed to be interposed between the positive electrode and the negative electrode,
a layer of metal lithium is provided on the negative electrode, and
a spacer is disposed in at least one of a region between the separator and the positive electrode and a region between the separator and the negative electrode.

3. The power storage device according to Claim 1 or 2, wherein a length of the restraint member in a longitudinal direction of the restraint member is longer than a length of the electrode assembly in a longitudinal direction of the electrode assembly.

4. The power storage device according to any one of Claims 1 to 3, wherein the restraint member is fixed to the exterior member.

5. The power storage device according to any one of Claims 1 to 4, wherein the restraint member has a mesh structure.

6. The power storage device according to any one of Claims 1 to 4, wherein a plurality of slits are provided in the restraint member.

7. The power storage device according to any one of Claims 1 to 4, wherein a plurality of round holes are provided in the restraint member.
